Europäisches Patentamt

European Patent Office

Office européen des brevets

(11) Publication number: **0 302 670**
**A2**

# (12) EUROPEAN PATENT APPLICATION

(21) Application number: **88307005.4**

(22) Date of filing: **29.07.88**

(51) Int. Cl.⁴: **H01C 10/20 , H01C 10/30 , B60R 16/02**

(30) Priority: **01.08.87 GB 8718265**

(43) Date of publication of application:
**08.02.89 Bulletin 89/06**

(84) Designated Contracting States:
**DE FR IT SE**

(71) Applicant: **CRYSTALATE ELECTRONICS LIMITED**
**Wharf House Medway Wharf Road**
**Tonbridge Kent TN9 1RE(GB)**

(72) Inventor: **Pitcher, Arnold**
**42 Drummond Road**
**Romford Essex(GB)**
Inventor: **Norburn, David William**
**7 Church View**
**Upminster Essex(GB)**

(74) Representative: **Cooke, William Douglas et al**
**Hughes Clark & Co. 63 Lincoln's Inn Fields**
**London WC2A 3JU(GB)**

(54) **Potentiometer.**

(57) A potentiometer incorporates means for monitoring angular position and linear displacement of an associated rotatable shaft (11). An elongate linear resistance element is supported on a member (3) in a housing (10), the member (3) being arranged for angular rotation with the shaft (11) by way of a cylindrical member (6). A first wiper (13) makes sliding contact with the resistance element on the member (3), upon linear displacement of the shaft (11). A second wiper (7) is secured to the end of the cylindrical member (6) and is arranged for angular rotation therewith as the shaft (11) is rotated. The second wiper (7) traverses an arcuate resistance element (8) which is supported and secured at an end of the housing (10). In operation, a voltage is applied to the ends of the two resistance elements and output voltages obtained at the wipers (13, 7) proportional to the linear displacement and angular position respectively of the shaft (11).

FIG.1.

FIG.2.

## POTENTIOMETER

This invention relates to electrical potentiometers and more particularly to a potentiometer for monitoring displacement of a shaft. The invention is particularly, but not exclusively, applicable to a potentiometer for monitoring displacement of a shaft in a motor vehicle gearbox.

The present invention provides an electrical potentiometer incorporating means for monitoring angular position and linear displacement of an associated rotatable shaft and in which the direction of linear displacement of the shaft is perpendicular to the plane of rotation thereof.

The potentiometer includes a housing adapted and arranged to rotatably and displaceably accommodate the shaft. An elongate linear resistance element is supported in the housing and has electrically conductive terminals connected to opposite ends thereof and arranged for connection to a voltage source. A first electrically conductive wiper means is supported for securement to the shaft and is adapted to traverse the elongate linear resistance element upon linear displacement of the shaft. A first electrically conductive output terminal means is electrically connected to the first wiper means whereby a first output voltage may be derived, proportional to the linear displacement of the shaft. An arcuate resistance element is also supported in the housing and has electrically conductive terminals connected to opposite ends thereof for connection to a voltage source. A second electrically conductive wiper means is supported for angular rotation with the shaft and adapted to traverse the arcuate resistance element. A second electrically conductive output terminal means is electrically connected to the second wiper means whereby a second output voltage may be derived proportional to the angular position of the shaft.

Means are suitably provided whereby angular rotation of the shaft does not effect the position of the first wiper means and linear displacement of the shaft does not affect the position of the second wiper means. In one particular embodiment this is achieved by providing the elongate linear resistance element supported on a member in the housing which is arranged for angular rotation with the shaft, the shaft, with the first wiper means, being linearly displaceable relative to the said member. The second wiper means is secured to the said member at an end thereof and is arranged for angular rotation therewith, the arcuate resistance element being supported and secured at an end of the housing.

Flexible conductors may conveniently be employed to provide electrical connections between terminals on the housing and the elongate linear resistance element and the associated first wiper means.

In one particular application, the said shaft is incorporated in a gearbox of a motor vehicle.

The invention is now described by way of example with reference to the accompanying drawings, in which:

Figure 1 represents a cross-sectional view of an embodiment of potentiometer according to the invention, for monitoring the position of a motor vehicle gearbox shaft;

Figure 2 represents an end view of the potentiometer of Figure 1;

Figure 3 represents a detail of a wiper and arcuate resistance element used in the potentiometer of Figure 1; and

Figure 4 represents a perspective view of part of a wiper carrier for securement to a shaft in the potentiometer of Figure 1.

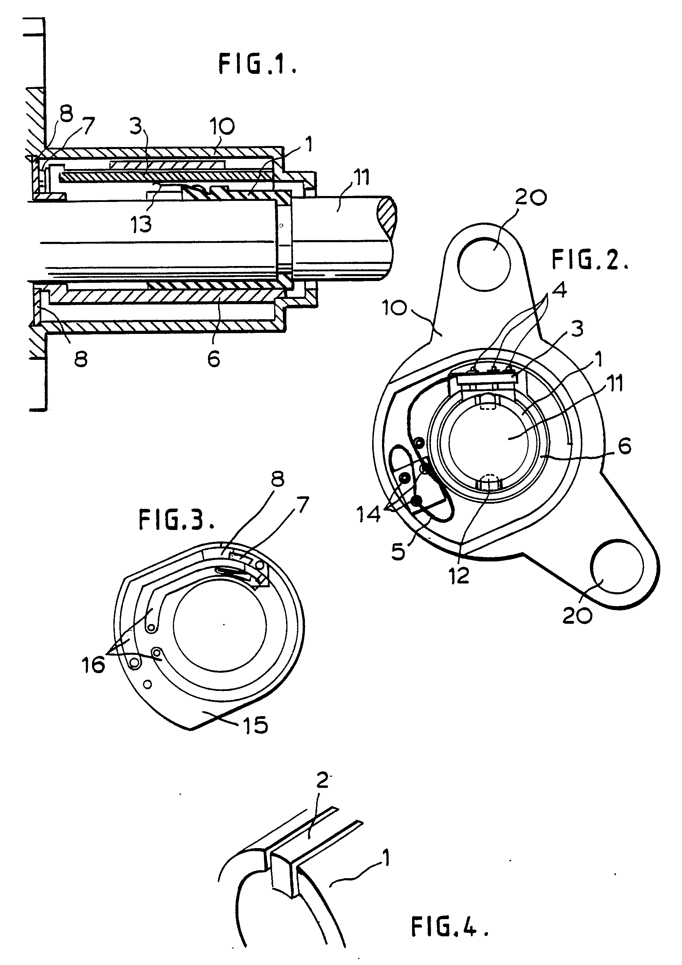

A housing 10 of moulded plastics construction is arranged to be bolted to a vehicle gearbox casing (not shown) by means of mounting holes 20 such that it can rotatably and displaceably accommodate a shaft 11 extending from the gearbox. A plastics sleeve 1 is mounted on the shaft 11 and secured in position by means of a resilient portion 2 thereof which locates in a hole 12 (Fig. 2) in the shaft 11. The sleeve 1 carries a first electrically conductive wiper 13 which is arranged in well known manner to make sliding contact, upon linear displacement of the shaft 11, with an elongate linear film resistance element and a conductive film collector track (not shown) arranged in well known side by side relationship on a support 3. The support 3 is fixed with respect to a substantially cylindrical member 6 which is rotatably supported in the housing 10 and arranged such that it undergoes angular rotation with the shaft 11, the sleeve 1 being arranged to slide in a slot in the member 6. Electrically conductive terminals 4 are provided, connected by flexible conductors 5 to further terminals 14 on the housing and by means of which a voltage source can be connected to the ends of the elongate linear resistance element and an output voltage may be derived, proportional to the linear displacement of the gearbox shaft 11. An arcuate film resistance element 8 of well known form is supported at an end of the housing 10, with a well known form of conductive collector track (not shown) located side by side therewith. A second electrically conductive wiper means 7, of well known form, is provided on a carrier 15 which is secured at the end of the member 6 and is rotatable therewith such that it undergoes angular rotation with the shaft 11 and traverses the arcuate resistance element 8. Electrically conductive terminals 16 on the carrier 15 enable a voltage source (not shown) to be connected to the ends of the arcuate resistance element 8 and an output voltage to be derived which is proportional to the angular position of the shaft 11.

## Claims

1. An electrical potentiometer for monitoring simultaneously angular position and linear displacement of a shaft mounted for axial displacement perpendicular to a plane of rotation of the shaft about its axis characterized in that means (13) movable linearly with the shaft (11) with respect to means (3, 6) rotatable with the shaft are arranged to provide an output voltage dependent on the linear displacement of the shaft and means (7) rotatable with said rotatable means (3, 6) with respect to fixed means (8) are arranged to provide a voltage dependent on the angular position of the shaft.

2. A potentiometer according to Claim 1, characterized in that there is provided:

(a) a housing (10) adapted and arranged to rotatably and displaceably accommodate the shaft;

(b) an elongate linear electrical resistance element supported in the housing and having electrically conductive terminals (4) connected to opposite ends thereof arranged for connection to a voltage source;

(c) an arcuate electrical resistance element (8) supported in the housing and having electrically conductive terminals (16) connected to opposite ends thereof arranged for connection to a voltage source;

(d) a first electrically conductive wiper means (13) supported for securement to the shaft and adapted to traverse the elongate linear resistance element upon linear displacement of the shaft, a first electrically conductive output terminal means being provided electrically connected to the first wiper means whereby a first output voltage may be derived, proportional to the linear displacement of the shaft;

(e) a second electrically conductive wiper means (7) supported for angular rotation with the shaft and adapted to traverse the arcuate resistance element (8), a second electrically conductive output terminal means being provided electrically connected to the second wiper means whereby a second output voltage may be derived proportional to the angular position of the shaft.

3. A potentiometer according to Claim 1 or 2, characterized in that means are provided whereby angular rotation of the shaft does not affect the position of the first wiper means and linear displacement of the shaft does not affect the position of the second wiper means.

4. A potentiometer according to Claim 3, characterized in that the elongate linear resistance element is supported on a member (3) in the housing, which member is arranged for angular rotation with the shaft and such that the shaft, with the first wiper means (13), is linearly displaceable relative to the said member, the second wiper means (7) being secured to the said member (3) at an end thereof and arranged for angular rotation therewith, the arcuate resistance element (8) being supported and secured at an end of the housing.

5. A potentiometer according to any of Claims 2 to 4, characterized in that flexible conductors (5) are employed to provide electrical connections between terminals on the housing and the elongate linear resistance element and the associated first wiper means.

6. A motor vehicle gearbox characterized in that it incorporates an electrical potentiometer according to any preceding claim.

FIG.1.

FIG.2.

FIG.3.

FIG.4.